# EUROPEAN PATENT APPLICATION

(11) **EP 3 800 298 A1**
(43) Date of publication of application: **07.04.2021**
(21) Application number: 19306275.9
(22) Date of filing: 03.10.2019
(51) Int. Cl.: E02F 9/16, E02F 3/32, E02F 9/00, E02F 9/12

(54) **CONSTRUCTION MACHINE**

(71) Applicant: Yanmar Power Technology Co., Ltd., Osaka City (JP)
(72) Inventor: MERCEY, Jean-Christophe, 52100 Saint Dizier (FR); OYAMADA, Yasuyuki, Fukuoka 833-0055 (JP); KOTANI, Daichi, Osaka 530-8311 (JP)
(74) Representative: Poindron, Cyrille

(57) **Abstract**

[Object]

To provide a construction machine capable of offering a good workability in narrow places as well as a good comfortableness to an operator.

[Solution]

A hydraulic excavator 1 which is a construction machine includes: a lower traveling body 2; an upper revolving body 3 capable of revolving and disposed above the lower traveling body 2; a lever stand 52 installed in a front portion of the upper revolving body 3; an engine disposed in a rear portion of the upper revolving body 3; an engine hood 32 that covers the engine; a driver's seat 51 disposed above the engine hood 32; and a protection frame 6 for protecting an operator sitting on the driver's seat 51. The protection frame 6 includes: a pair of column portions 61L, 61R that stand up and extend upward from left and right side walls of the lever stand 52; and an eaves portion 62 that extends rearward from upper end portions of the pair of column portions 61L, 61R, to overhang the driver's seat 51.

## Description

### [Technical Field]

The present invention relates to a construction machine including a protection frame for protecting an operator.

### [Background Art]

Patent Literature 1 shows a small-sized hydraulic excavator that includes a protection frame for protecting an operator sitting on a driver's seat. The protection frame has a double-column structure having a pair of column members. The pair of column members are attached to left and right protruding portions provided on the front side of the revolving frame. According to Patent Literature 2, which shows a small-sized hydraulic excavator having substantially the same configuration as that of Patent Literature 1, a pair of column members are attached to left and right support members provided on an outer surface of a counterweight which is located at the rear of a revolving frame.

In either of the hydraulic excavators mentioned above, the pair of column members are disposed on the outer side of the revolving frame, and the turning radius of a machine body is increased due to the protection frame and a member for attaching the protection frame. This involves a risk that execution of works in a narrow place may be hindered. Particularly in a compact excavator having a machine weight of about one ton, such a risk is pronounced because the compact excavator is supposed to perform indoor works. In addition, the hydraulic excavator of Patent Literature 1 does not allow the operator sitting on the driver's seat to stretch his/her legs, which raises a problem of impaired comfortableness, too.

### [Citation List]

### [Patent Literature]

[Patent Literature 1] Japanese Patent Application Laid-Open No. 2018-199965
[Patent Literature 2] Japanese Patent Application Laid-Open No. 2018-199964

### [Summary of Invention]

### [Technical Problem]

The present invention was made in view of the problems described above, and aims to provide a construction machine capable of offering a good workability in narrow places as well as a good comfortableness to an operator.

### [Solution to Problem]

A construction machine according to the present invention includes: a lower traveling body; an upper revolving body that is capable of revolving and is disposed above the lower traveling body; a lever stand installed in a front portion of the upper revolving body; an engine disposed in a rear portion of the upper revolving body; an engine hood that covers the engine; a driver's seat disposed above the engine hood; and a protection frame for protecting an operator sitting on the driver's seat, the protection frame including a pair of column portions and an eaves portion, the pair of column portions standing up and extending upward from left and right side walls of the lever stand, the eaves portion extending rearward from upper end portions of the pair of column portions, to overhang the driver's seat.

In this construction machine, the column portions of the protection frame stand up and extend upward from the left and right side walls of the lever stand. This can suppress an increase in the turning radius of a machine body, thus improving the workability in narrow places. In addition, the operator sitting on the driver's seat can stretch his/her legs frontward, and therefore a good comfortableness can be provided.

Preferably, the eaves portion has a U-shape with its front end opened in a plan view. This can avoid interference of a front portion of the eaves portion with a wire at a time of lifting up and moving the construction machine with a three-point suspension system.

Preferably, the construction machine includes a handrail portion that bridges the pair of column portions and that is disposed above the lever stand. This can suppress the operator's body shaking forward during a work on a sloping land or the like. Moreover, it is not necessary to separately provide a handrail portion to the lever stand, and the handrail portion can be easily installed without obstructing the visibility from the operator.

Preferably, the construction machine includes first, second, and third wire attaching portions, the first and second wire attaching portions being provided respectively in left and right portions of earth-moving equipment that is installed in front of the lower traveling body, the third wire attaching portion being provided on an upper surface of work equipment that is pivotally supported in front of the upper revolving body. Such a configuration enables the construction machine to be lifted up with a three-point suspension system using wires attached to the first to third wire attaching portions.

Preferably, a beam member extending in a left-right direction is disposed in a middle of the eaves portion with respect to a front-rear direction. The beam member reinforces the protection frame, and thus can strengthen a protection function. Since the beam member is disposed in the middle of the eaves portion with respect to the front-rear direction, the beam member is less likely to interfere with the wire used for the three-point suspension. Accordingly, the beam member does not hinder movement of the lifted-up construction machine.

### [Brief Description of Drawings]

[FIG. 1] A left side view of a hydraulic excavator which is an example of a construction machine according to the present invention.
[FIG. 2] A plan view of the hydraulic excavator.
[FIG. 3] A front perspective view of the hydraulic excavator.
[FIG. 4] A rear perspective view of a lever stand.
[FIG. 5] A diagram showing the hydraulic excavator being lifted up with a three-point suspension system.
[FIG. 6] A perspective view showing a variation of a protection frame.
[FIG. 7] A schematic plan view of a hydraulic excavator shown in FIG. 6.
[FIG. 8] A rear perspective view showing a variation of the protection frame.

### [Description of Embodiments]

An embodiment of the present invention will be described with reference to the drawings.

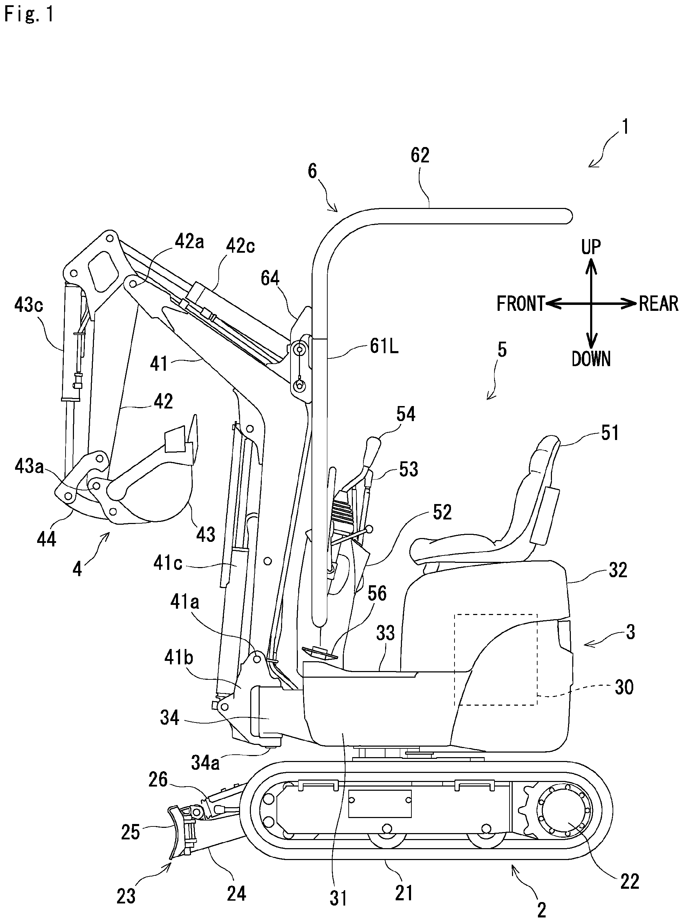

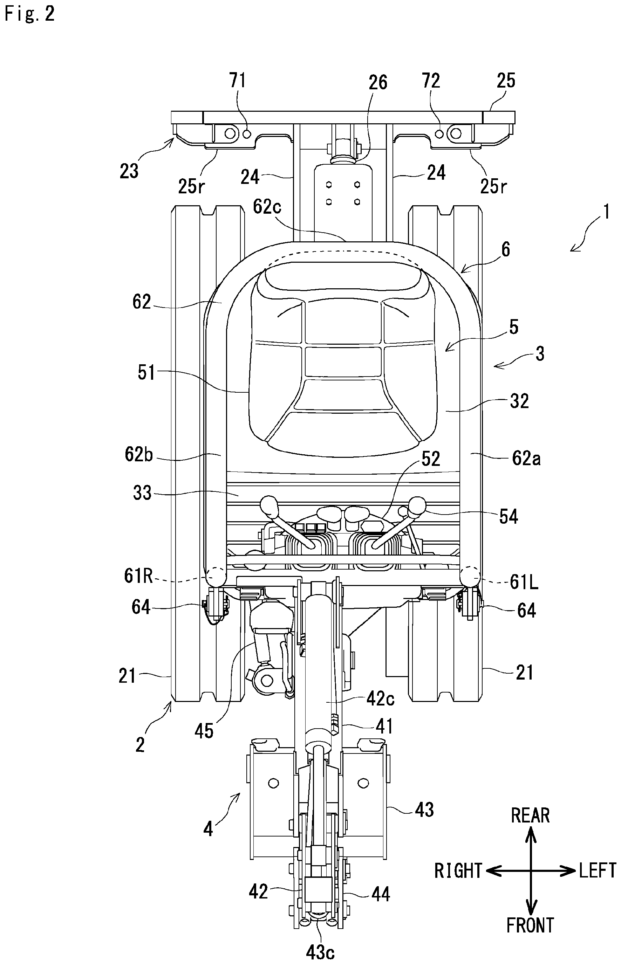

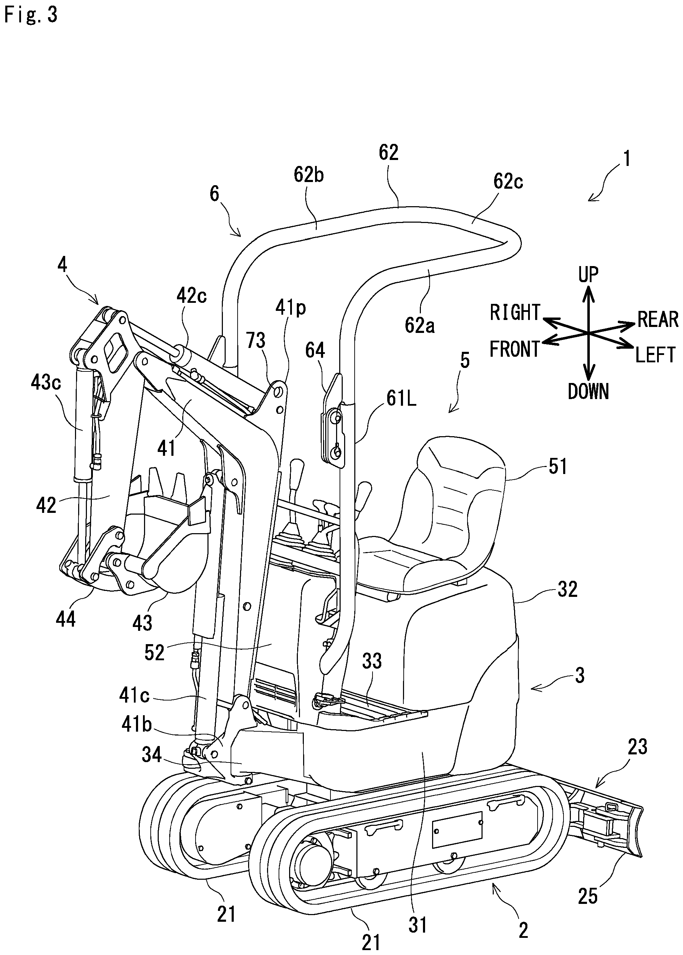

FIG. 1 is a left side view of a hydraulic excavator 1 (backhoe) which is an example of a construction machine according to the present invention. FIG. 2 is a plan view of the hydraulic excavator 1. FIG. 3 is a perspective view of the hydraulic excavator 1. In FIGs. 2 and 3, an upper revolving body 3 is revolved by 180 degrees, and therefore work equipment 4 and earth-moving equipment 23 are disposed opposite to each other.

The hydraulic excavator 1 is a revolving-type work machine, and in this embodiment, is configured as a compact excavator having a machine weight of about one ton. The hydraulic excavator 1 includes: a lower traveling body 2; an upper revolving body 3 that is capable of revolving and is disposed above the lower traveling body 2; a lever stand 52 installed in a front portion of the upper revolving body 3; an engine 30 disposed in a rear portion of the upper revolving body 3; an engine hood 32 that covers the engine 30; a driver's seat 51 disposed above the engine hood 32; and a protection frame 6 for protecting an operator sitting on the driver's seat 51.

The lower traveling body 2 is driven by receiving motive power from the engine 30, to make the hydraulic excavator 1 travel or revolve. The lower traveling body 2 includes a pair of left and right crawlers 21, and a pair of traveling motors 22 serving as hydraulic actuators for driving the crawlers 21. The earth-moving equipment 23 is installed on the front side of the lower traveling body 2. The earth-moving equipment 23 includes: a pair of blade arms 24; a blade 25 serving as a earth-moving plate, which extends in a left-right direction across distal end portions of the blade arms 24; and a blade cylinder 26 serving as a hydraulic actuator for turning the blade 25 in an up-down direction.

The upper revolving body 3 includes: a revolving frame 31 disposed above the pair of crawlers 21 and supported in a revolvable manner; and a revolving motor (not shown) serving as a hydraulic actuator for driving and revolving the revolving frame 31 in the left-right direction. The upper revolving body 3 has, in its rear portion, an engine room where the engine 30 constituting a prime mover is stored. The engine 30 drives a hydraulic pump (not shown), to supply motive power to various hydraulic actuators. A driving unit 5 is provided on the upper front side of the engine hood 32 which covers the engine 30. A floor 33 serving as a platform on which the operator sitting on the driver's seat 51 puts his/her feet is disposed on the front side of the engine hood 32. The floor 33 is made of a plate material disposed on the revolving frame 31.

In front of the upper revolving body 3, the work equipment 4 is pivotally supported. In this embodiment, a front portion of the revolving frame 31 supports a boom bracket 41b such that the boom bracket 41b can turn in a horizontal direction, and the boom bracket 41b supports the work equipment 4 such that the work equipment 4 can turn in the up-down direction. The horizontal turning of the boom bracket 41b causes the work equipment 4 to make swing motion, so that the work equipment 4 moves horizontally relative to the upper revolving body 3. In this manner, the hydraulic excavator 1 is capable of horizontally turning a proximal end portion of the work equipment 4, which is what we call a boom swing function. In general, the boom swing function is provided to a compact excavator used for execution of works in narrow places.

The work equipment 4 is driven by receiving motive power from the engine 30, and works to, for example, excavate earth and sand in accordance with an operation performed on the driving unit 5. The work equipment 4 includes: a boom 41; an arm 42; a bucket 43 as an attachment used for excavation; and hydraulic actuators for driving them (i.e., a boom cylinder 41c, an arm cylinder 42c, a bucket cylinder 43c, and a swing cylinder 45, each of which will be described later).

The boom 41 is attached to the boom bracket 41b such that the boom 41 can turn in the up-down direction. The boom 41 has its proximal end portion supported by the boom bracket 41b, extends in the up-down direction therefrom, and bends to form a boomerang shape in a side view. The boom cylinder 41c capable of expansion and contraction is disposed between the boom bracket 41b and a middle portion of the boom 41. The turning of the boom 41 in the up-down direction relative to the boom bracket 41b is actuated in accordance with expansion and contraction of the boom cylinder 41c.

The boom bracket 41b is attached to a front end portion of the revolving frame 31 via a boom bracket attachment 34 such that the boom bracket 41b can turn (swing) horizontally. The boom bracket 41b is supported so as to be capable of turning horizontally about a pivot pin 34a whose axis is directed in the up-down direction. The swing cylinder 45, which expands and contracts in a front-rear direction when actuated, is disposed between the upper revolving body 3 and the boom bracket 41b. The horizontal turning of the boom bracket 41b is actuated in accordance with expansion and contraction of the swing cylinder 45.

The arm 42 is attached to the boom 41 such that the arm 42 can turn in the up-down direction (turn in the front-rear direction). A proximal end portion of the arm 42 is supported so as to be capable of turning in the up-down direction about a pivot pin 42a whose axis is directed in the horizontal direction. The arm cylinder 42c capable of expansion and contraction is disposed between a middle portion of the boom 41 and the proximal end portion of the arm 42. The up-down turning of the arm 42 relative to the boom 41 is actuated in accordance with expansion and contraction of the arm cylinder 42c.

The bucket 43 is attached to the arm 42 such that the bucket 43 can turn in the up-down direction. A proximal end portion of the bucket 43 is supported so as to be capable of turning in the up-down direction (turning in the front-rear direction) about a pivot pin 43a whose axis is directed in the horizontal direction. A bucket link 44 for transmitting a driving force to the bucket 43 is interposed between the bucket 43 of a distal end portion of the arm 42. The bucket cylinder 43c capable of expansion and contraction is disposed between the bucket link 44 and the proximal end portion of the arm 42. The up-down turning of the bucket 43 relative to the arm 42 is actuated in accordance with expansion and contraction of the bucket cylinder 43c.

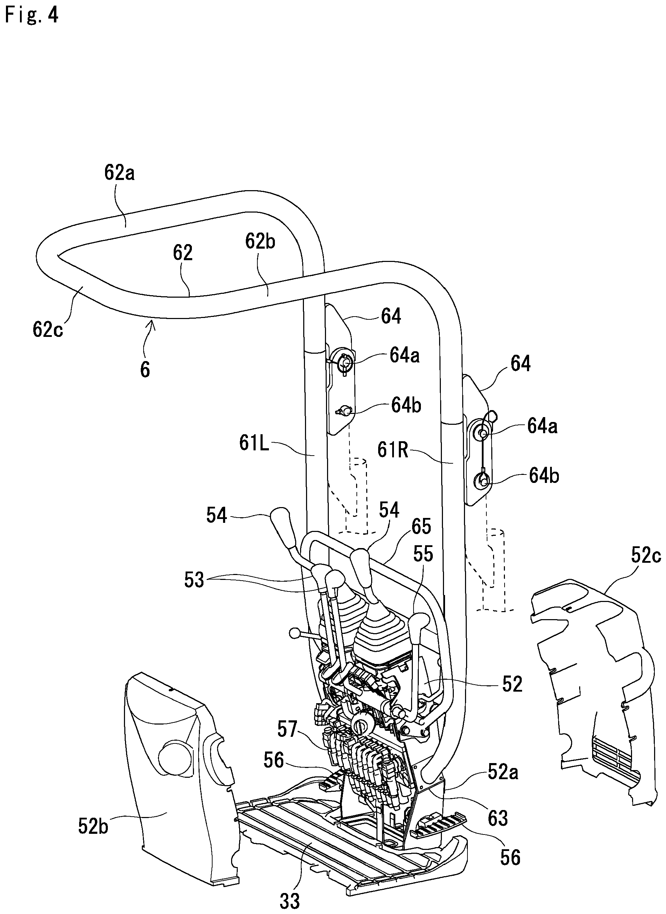

The driving unit 5 includes: the driver's seat 51 for the operator to sit thereon; and the lever stand 52 having operation tools to be operated by the operator. The operator, while sitting on the driver's seat, operate various operation tools installed on the lever stand 52, and thereby can perform traveling, revolving, works, and the like. Referring to FIG. 4, the operation tools include not only operation levers such as travel levers 53 used to operate the crawlers 21, a work lever 54 used to operate the work equipment 4, and a blade lever 55 used to operate the blade 25, but also foot pedals 56, switches, and the like.

The lever stand 52 is provided upright on the floor 33 of the upper revolving body 3. The lever stand 52 is constituted of a box 52a made of a sheet metal, and is covered with housings 52b, 52c made of a resin (plastic). The housings 52b, 52c are separated in the front-rear direction. The box 52a is fixed to the floor 33 with a fixture such as bolts. Disposed inside the box 52a is a control valve 57 that controls the direction and flow rate of pressure oil to be supplied from the hydraulic pump to each hydraulic actuator. The operation levers mentioned above are coupled to a spool of a directional control valve of the control valve 57 via a link mechanism. Each of the hydraulic actuators can be actuated in accordance with operations of the operation levers.

The protection frame 6 constitutes a protection structure for protecting an occupant (operator) from serious accidents caused by turnover or rollover of a machine body. In the hydraulic excavator 1 of this embodiment, the protection frame 6 includes a pair of column portions 61L, 61R and a eaves portion 62. The pair of column portions 61L, 61R stand up and extend upward from left and right side walls of the lever stand 52. The eaves portion 62 extends rearward from upper end portions of the pair of column portions 61L, 61R, to overhang the driver's seat 51. This can suppress an increase in the turning radius of the machine body which may otherwise be caused by the presence of the protection frame 6, and thereby can improve the workability in narrow places.

In the hydraulic excavator 1, the operator sitting on the driver's seat 51 can stretch his/her legs frontward, and therefore a comfortableness can be provided. This can be achieved because, unlike the hydraulic excavator of Patent Literature 1 mentioned above, lower end portions of the pair of column portions 61L, 61R are located above the floor 33 so that lower side portions of the lever stand 52 are opened toward the front side. In addition, such a configuration gives the operator a good visibility of his/her feet and therearound, and thus can exert an effect of increased operability in excavation works or the like.

The pair of column portions 61L, 61R, which are located within the width dimension of the machine body, are curved so as to expand in a width direction from their lower end portions, and extend upward. The pair of column portions 61L, 61R extend vertically in a side view as shown in FIG. 1, but instead may extend obliquely upward toward the rear. In this embodiment, as shown in FIG. 4, the lower end portion of the column portion 61R has a flange 63, and the flange 63 is fixed to the box 52a with a fixture such as bolts. The flange 63 is disposed above the foot pedals 56 and below the operation levers that protrude from the side wall of the lever stand 52. The column portion 61L has the same configuration. The pair of column portions 61L, 61R are attached to the left and right side walls of the lever stand 52 in a bilateral symmetrical manner.

The eaves portion 62 includes: a pair of rod-like portions 62a, 62b extending rearward from the upper end portions of the pair of column portions 61L, 61R, respectively; and a rod-like portion 62c extending in the left-right direction (i.e., a machine body width direction) so as to connect rear end portions of the rod-like portions 62a, 62b. In this embodiment, as shown in FIG. 2, the rod-like portion 62c extends along the rear end of the driver's seat 51 in a plan view. Thus, the protection frame 6 has a pair of column-like members that stand and extend upward from the side walls of the lever stand 52, then overhang the driver's seat 51, and then are connected to each other at a location corresponding to a rear portion of the driver's seat 51.

The pair of column portions 61L, 61R and the eaves portion 62 which constitute the protection frame 6 are made of a steel pipe, for example. It may be conceivable that a plate-like front guard is attached between the pair of column portions 61L, 61R or a roof is attached to the eaves portion 62, though not employed in this embodiment. This can exert functions as a sunshade and a rain cover, and can protect the operator from flying materials. A handrail member 65 that the operator can grip is disposed at the rear of the protection frame 6. The handrail member 65 stands and extends upward from the left and right side walls of the lever stand 52, to form a loop.

In this embodiment, the protection frame 6 has turning mechanisms 64 capable of turning the eaves portion 62 relative to the pair of column portions 61L, 61R. As shown in FIG. 4, each of the turning mechanisms 64 includes a lock pin 64a for locking the eaves portion 62 against turning, and a turning shaft 64b about which the eaves portion 62 turns. Removal of the lock pins 64a permits the eaves portion 62 to turn frontward about the turning shafts 64b so that the height of the protection frame 6 can be lowered, as indicated by the broken lines. In order to avoid interference of the eaves portion 62 after turning with the work equipment 4, the eaves portion 62 preferably has a U-shape with its front end opened in a plan view.

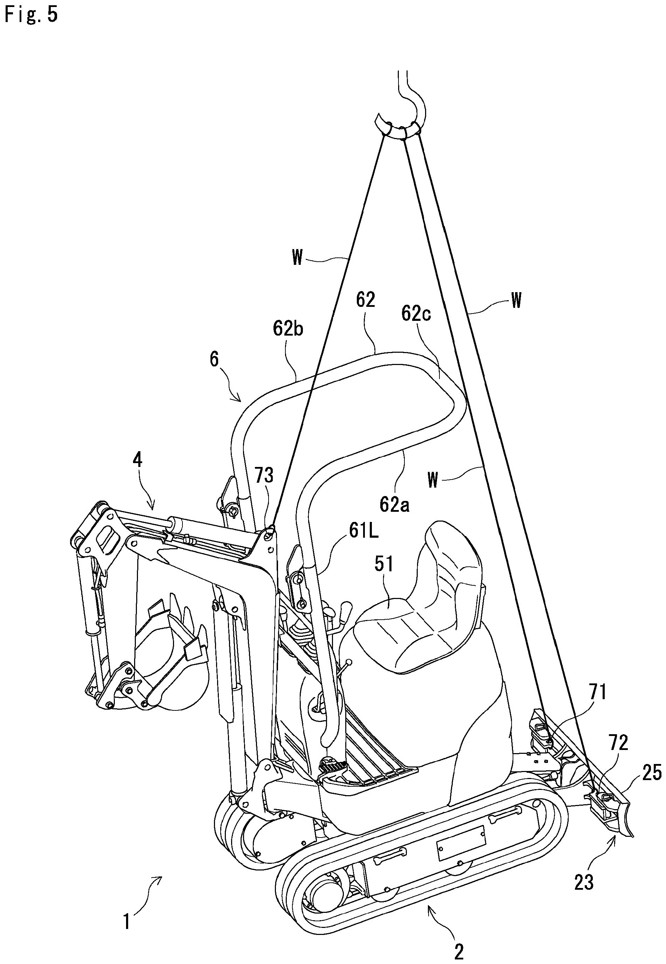

FIG. 5 shows the hydraulic excavator 1 being lifted up with wires W hung at three points (wire attaching portions 71 to 73 which will be described later) with the upper revolving body 3 revolved to have the earth-moving equipment 23 and the work equipment 4 disposed opposite to each other. In this embodiment, the eaves portion 62 has a U-shape with its front end opened in a plan view, and therefore it is possible to avoid the eaves portion 62 interfering with the wire W when the hydraulic excavator 1 is lifted up and moved with a three-point suspension system. In the hydraulic excavator of Patent Literature 1 mentioned above, on the other hand, a coupling shaft extending in the left-right direction is disposed in a front portion of the eaves portion, which may hinder three-point suspension due to the coupling shaft interfering the wire.

The hydraulic excavator 1 has the wire attaching portions 71, 72 (first and second wire attaching portions) provided in left and right portions of the earth-moving equipment 23, and the wire attaching portion 73 (third wire attaching portion) provided on an upper surface of the work equipment 4. Although any of the wire attaching portions 71 to 73 of this embodiment is a hole on which the wire W can be hung, this is not limitative. The wire attaching portions 71, 72 are provided in reinforcing materials 25r that reinforce a back surface of the blade 25 (see FIG. 2). The wire attaching portion 73 is provided in a plate member 41p that constitutes a pivotal coupling portion of a tube of the arm cylinder 42c (see FIG. 3).

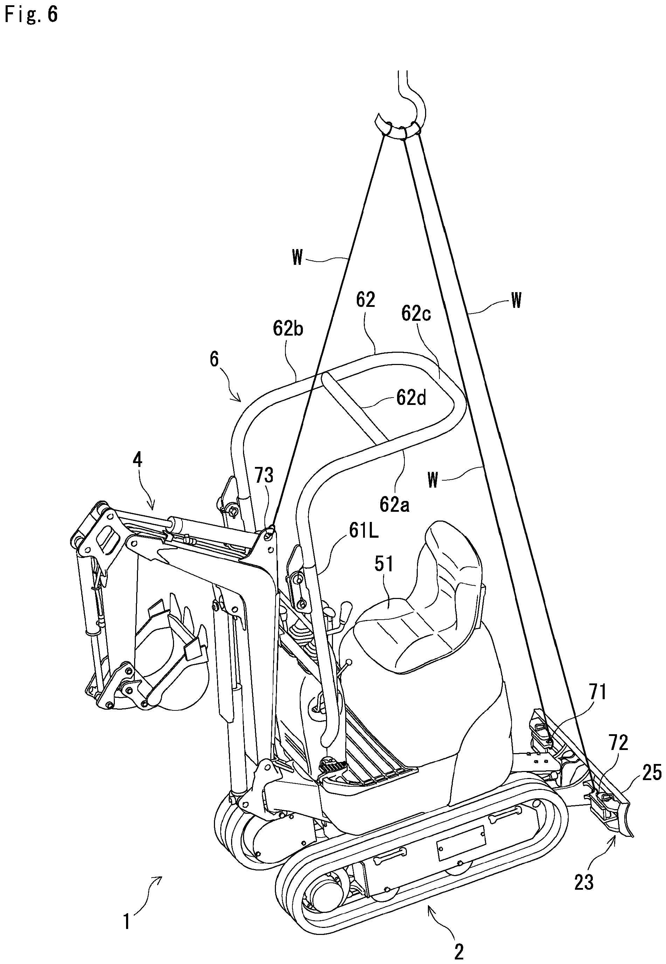

To strengthen the protection function of the protection frame 6, it may be conceivable that a beam member 62d extending in the left-right direction is disposed in the middle of the eaves portion 62 with respect to the front-rear direction, as shown in FIG. 6. The beam member 62d bridges the pair of rod-like portions 62a, 62b to reinforce the protection frame 6. Since the beam member 62d is disposed in the middle of the eaves portion 62 with respect to the front-rear direction, the front side of the eaves portion 62 is opened. Thus, even though the beam member 62d is disposed, the eaves portion 62 is less likely to interfere with the wire W, and therefore does not hinder movement of the lifted-up hydraulic excavator 1.

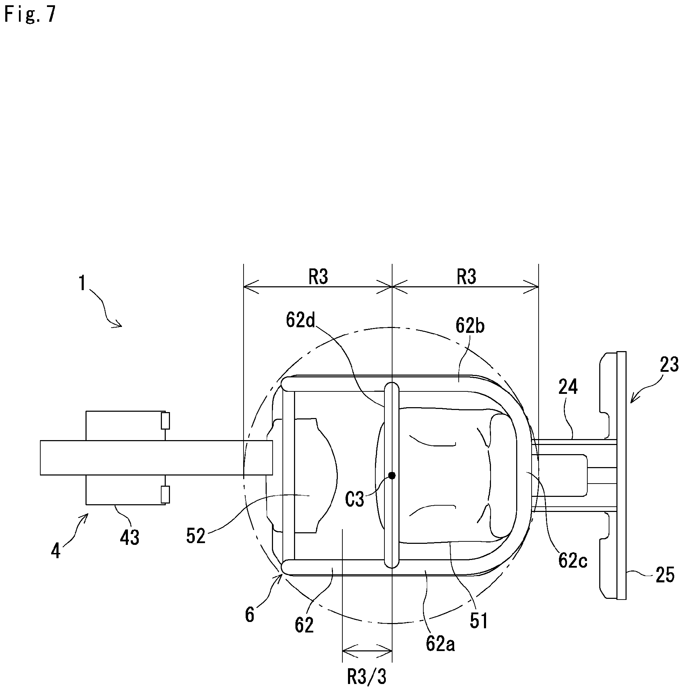

FIG. 7 is a plan view schematically showing the hydraulic excavator 1 of FIG. 6. In this example, the beam member 62d passes through a revolution center C3, but this is not limitative. The beam member 62d may be displaced to the front side) left side in FIG. 7) or to the rear side (right side in FIG. 7) from the revolution center C3. Here, in order to avoid interference with the wire W (not illustrated in FIG. 7) hung on the wire attaching portion 73 at a time of three-point suspension, it is preferable that the beam member 62d is disposed rearward of a location that is closer to the front side than the revolution center C3 by 1/3 of the turning radius (rear end turning radius R3) of the machine body.

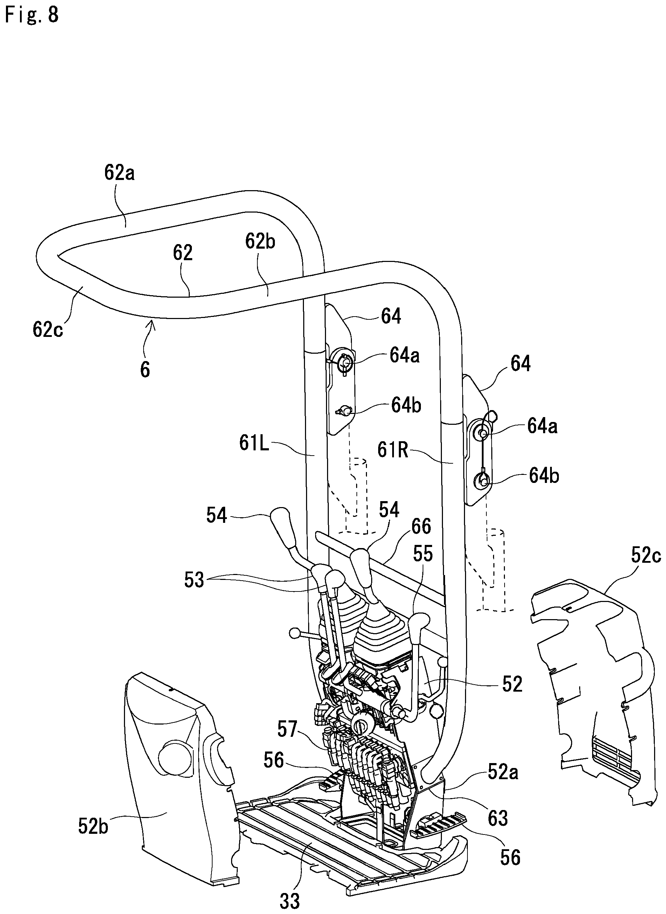

In the embodiment described above, the handrail member 65 is separately provided to the lever stand 52. This, however, is not limitative. For example, a handrail portion 66 as illustrated in FIG. 8 may be provided to the protection frame 6. The handrail portion 66 bridges the pair of column portions 61L, 61R, and is disposed above the lever stand 52. The handrail portion 66 is formed of a rod-like member extending in the left-right direction, whose opposite end portions are secured to the pair of column portions 61L, 61R. To provide a good visibility to the operator, the handrail portion 66 is preferably located below the distal end of the lever (e.g., the work lever 54) that protrudes from a top surface of the lever stand 52.

The present invention is not limited to the embodiment described above, and various modifications and changes may be made without departing from the gist of the present invention.

### [Reference Signs List]

- 1: hydraulic excavator (example of construction machine)
- 2: lower traveling body
- 3: upper revolving body
- 4: work equipment
- 5: driving unit
- 6: protection frame
- 23: earth-moving equipment
- 30: engine
- 32: engine hood
- 33: floor
- 51: driver's seat
- 52: lever stand
- 61R: column portion
- 61L: column portion
- 62: eaves portion
- 66: handrail portion
- 71: wire attaching portion (first wire attaching portion)
- 72: wire attaching portion (second wire attaching portion)
- 73: wire attaching portion (third wire attaching portion)

## Claims

1. A construction machine comprising:
a lower traveling body;
an upper revolving body that is capable of revolving and is disposed above the lower traveling body;
a lever stand installed in a front portion of the upper revolving body;
an engine disposed in a rear portion of the upper revolving body;
an engine hood that covers the engine;
a driver's seat disposed above the engine hood; and
a protection frame for protecting an operator sitting on the driver's seat,
the protection frame including a pair of column portions and a eaves portion, the pair of column portions standing up and extending upward from left and right side walls of the lever stand, the eaves portion extending rearward from upper end portions of the pair of column portions, to overhang the driver's seat.

2. The construction machine according to claim 1, wherein
the eaves portion has a U-shape with its front end opened in a plan view.

3. The construction machine according to claim 1 or 2, comprising a handrail portion that bridges the pair of column portions and that is disposed above the lever stand.

4. The construction machine according to any one of claims 1 to 3, including first, second, and third wire attaching portions, the first and second wire attaching portions being provided respectively in left and right portions of earth-moving equipment that is installed in front of the lower traveling body, the third wire attaching portion being provided on an upper surface of work equipment that is pivotally supported in front of the upper revolving body.

5. The construction machine according to any one of claims 1 to 4, wherein
a beam member extending in a left-right direction is disposed in a middle of the eaves portion with respect to a front-rear direction.
